# EUROPEAN PATENT APPLICATION

(11) **EP 3 239 407 A1**
(43) Date of publication of application: **01.11.2017**
(21) Application number: 17165200.1
(22) Date of filing: 06.04.2017
(51) Int. Cl.: E02D 33/00

(54) **ARRANGEMENT AND METHOD FOR MEASURING STRUCTURAL STRENGTHS OF PILES**

(30) Priority: 06.04.2016 FI 20165298
(71) Applicant: Ilmi Solutions Oy, 70500 Kuopio (FI)
(72) Inventor: Pasanen, Tuukka, 88300 Paltamo (FI); Pasanen, Mikko, 70220 Kuopio (FI)
(74) Representative: Heinonen & Co

(57) **Abstract**

In the invention there is shown an arrangement for measuring structural strengths of a pile, comprising: a number of sensors embedded in the pile, a readable memory comprising data transmitting means for transmitting sensor data to a terminal device. The invention also shows a related pile, hammer, method and a piling system.

## Description

### FIELD OF THE INVENTION

Generally the present invention relates to measuring arrangements. In particular, however not exclusively, the present invention pertains to arrangements and methods for measuring structural strengths, e.g. load bearing capacity, of piles.

### BACKGROUND

A pile is a vertical structural element that is driven deep into the ground. Generally concrete piles are used in building foundations. In a deep foundation building loads are transferred to the earth further down from the surface. Concrete piles are often utilized for transferring such load. However, wood, steel and/or reinforced concrete piles are used in pilings.

The structural strengths, such as the bearing load capacity, of the piles are measured when the piles are driven into the ground to ensure that the piles hold up the buildings or other constructions designed on top of the piles. The load bearing capacity is determined either by the structural bearing capacity or the geotechnical bearing capacity. The smaller value of the two last mentioned determines the bearing capacity. Today, however, the measurement process is challenging and time consuming.

In a known method a Pile Driving Analyzer (PDA) is used for measuring the bearing load capacity of the piles. However, the PDA system requires that sensors are drilled into each pile separately. The task is challenging and generally requires a qualified geo technician to execute the drillings. After the piles have been driven to the ground a geotechnician is needed to analyze the results.

It is problematic to have a qualified professional geotechnician to always drill and analyze such measurements. Also, the fact that the sensors are drilled afterwards into the piles leaves room for error in the measurements. The sensors may end up on different locations in the piles and thus the measurement does not remain steady and accurate.

### SUMMARY OF THE INVENTION

The objective is to at least alleviate the problems described hereinabove not satisfactorily solved by the known arrangements, and to provide a feasible arrangement for measuring structural strengths such as the bearing load capacity of driven piles.

The aforesaid objective is achieved by the embodiments of an arrangement in accordance with the present invention.

Accordingly, in one aspect of the present invention an arrangement for measuring the structural strengths of a pile comprises
- a number of sensors embedded in the pile,
- a readable memory comprising data transmitting means for transmitting sensor data to a terminal device.

In one embodiment the sensors are accelerometers, strain gauges, pressure sensors, geophones and/or gyroscopes.

In another, either supplementary or alternative, embodiment the data transmitting means are embedded in the pile. In a further, either supplementary or alternative, embodiment the data transmitting means are arranged outside the pile.

In a further, either supplementary or alternative, embodiment the data transmitting means are based on Radio Frequency (RF) techniques, as applied as in wireless data transmitting means such as means for RFID, Wi-Fi, NFC or Bluetooth®.

In a further, either supplementary or alternative, embodiment the measured signal is processed to obtain structural strength as the bearing load capacity of the pile in the measurements.

In another aspect of the present invention an arrangement for measuring the structural strengths of a pile comprises
- a number of sensors arranged to a piling hammer,
- a readable memory comprising data transmitting means for transmitting sensor data to a terminal device.

In a third aspect of the present invention, a method for measuring structural strengths of a pile comprises at least the steps
- arranging reinforcements in a mold,
- attaching a number of sensors and a readable memory to the reinforcements,
- pouring concrete into the mold,
- solidifying the concrete,
- transporting and moving the concrete pile,
- driving the pile to the ground,
- measuring a force wave moving in the pile, and
- transmitting measured data to a terminal device.

According to an optional embodiment of the invention, the pile is provided with sensor locations for mounting a number of sensors to the pile, if the pile is already a solid pile, such as a pile made of wood, steel, plastics, rock, ferroconcrete, fiber-concrete composite or a composition thereof. The sensors are mounted to locations at the sensor specific mounting position having a distance from the end of the pile, and/or mounting depth in the pile structure.

The utility of the present invention follows from a plurality of factors depending on each particular embodiment. In some embodiments the sensors may be advantageously located inside the pile. In some embodiments the location of the sensors may be standardized such that the measurement remains steady and accurate. In some embodiments the sensor data may be advantageously read via wireless communication means. In some embodiments the measurement data may be stored temporarily in readable memory and read later with a terminal device.

According to an embodiment of the invention the method steps comprise optionally to pouring concrete a step of pouring another solidifying material into the mold or providing the location of at least one of the sensors for the mounting of said at least one sensor of the sensors,

According to an embodiment of the invention the method steps comprise optionally to solidifying concrete a step of solidifying another solidifying material in the mold or mounting at least one sensor of the sensors,

A pile according to an embodiment of the invention comprises at least one embedded sensor in the pile.

A hammer for hammering a pile into the pile position according to an embodiment of the invention, comprises at least one sensor attached to the hammer.

A piling system according to an embodiment of the invention comprises an ensemble of piles, comprising at least one pile according to an embodiment of the invention. According to an embodiment of the invention the system can comprise also a hammer according to an embodiment of the invention so to assemble the pile to its location.

A piling system according to an embodiment of the invention comprises at least one radio-transmitter for wireless communication of data about the measured quantities in determination of the structural strength of the pile.

Some embodiments of the present invention may be so easy to use that it doesn't necessarily require a professional to handle, such as a geotechnician. An ordinary person may be able to operate some embodiments of the present invention as the sensors may be embedded in the piles during manufacturing.

The expression "a number of" refers herein to any positive integer starting from one (1), e.g. to one, two, or three, for example, but may be even larger in certain embodiments, as referring to an arbitrary ensemble of those objects that are cited with the expression a number of (objects).

The expression "a plurality of" refers herein to any positive integer starting from two (2), e.g. to two, three, or four, for example, but may be even larger in certain embodiments, as referring to an arbitrary ensemble of those objects that are cited with the expression a number of objects.

Different embodiments of the present invention are disclosed in the dependent claims. Embodiments of the invention are combinable in suitable part.

### BRIEF DESCRIPTION OF THE RELATED DRAWINGS

Next the invention is described in more detail with reference to the appended drawings in which
Fig. 1 illustrates piles driven into the ground according to an embodiment of the present invention.
Fig. 2 illustrates a transmitter and number of sensors embedded to a pile according to an embodiment of the present invention.
Fig. 3 illustrates a number of sensors arranged to a pile driver according to an embodiment of the present invention.
Fig. 4 is a flow diagram of a method according to an embodiment of the present invention, and
Fig. 5. illustrates examples on embodiments of the invention.

### DETAILED DESCRIPTION OF THE EMBODIMENTS

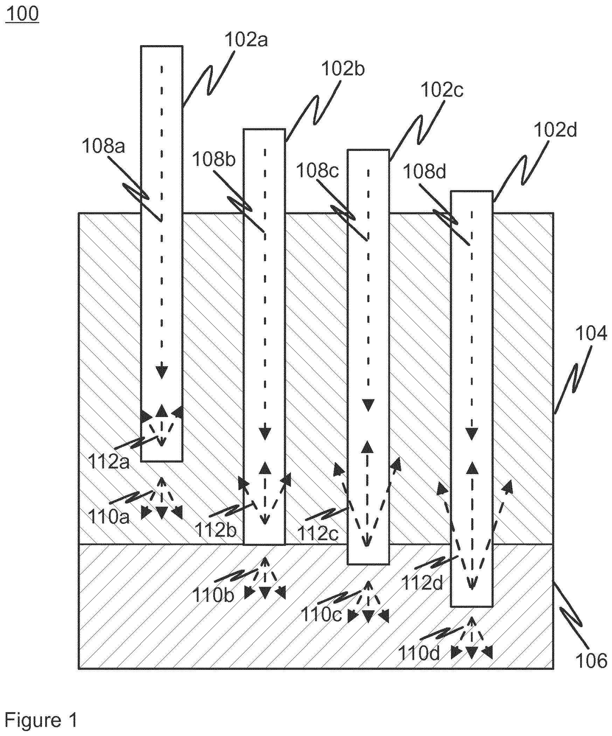

Referring to figure 1, piles 102a-d are driven to the ground 104. A bearing layer 106 of the ground 104 is illustrated in figure 1 as well. Pile 102a has been driven to the ground 104 but has not yet reached the bearing layer 106. A shock wave 108a-d created by a driving hammer moves in the piles 102a-d from the top part towards the bottom part. Part of the shock wave moves to the ground 104, i.e. the ground shock wave 110a-d, whereas part of the shock wave returns back towards the top part, i.e. the reflecting shock wave 112a. The ground resistance affects the reflecting amount. For example reflecting shock wave 112a has a lower amplitude than the reflecting shock wave 112b. Pile 102b has reached the bearing layer 106 and the ground resistance increases.

Further, pile 102c has been driven into the bearing layer 106. The resistance increases and thereby the reflecting shock wave 112c increases. As a result the load bearing capacity of the pile increases as well. Pile 102d has been driven deeper into the bearing layer 106. The reflecting shock wave 112d has the highest amplitude. The desired load bearing capacity has been reached with pile 102d. The reflecting shock waves 112a-d are measured with sensors embedded in the piles 102a-102d.

A pile may be any, preferably essentially vertical, supporting structure. Concrete piles may be used in preferable embodiments of the invention. Optionally, however, piles may be wood, steel or any other suitable material for carrying a load.

A pile may be driven to the ground with pile drivers or pile driving rigs comprising a hammer for providing a blow to the pile.

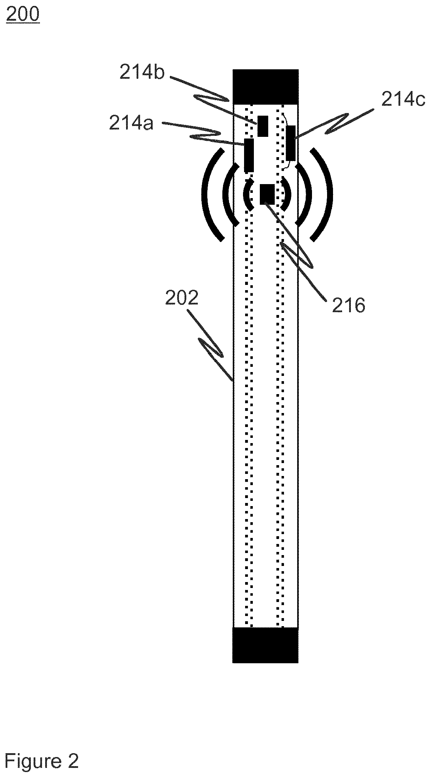

Referring to figure 2, pile 202 has a number of embedded sensors 214a-c for measuring structural strengths of the pile 202. The sensors 214a-c may be for example, accelerometers, strain gauges, pressure sensors, gyroscopes or any other sensors suitable for measuring the structural strengths. The sensors may be arranged close to the top part of the pile. The sensors may be embedded in the pile during the manufacturing of the pile, for example during casting. In some embodiments the sensors may be arranged essentially in the center of the pile. Some concrete piles may comprise reinforcements and the sensors may be attached to the reinforcements inside the pile, for example.

The sensors 214a-c may measure the shock wave movement in the piles. The bearing load capacity may be estimated by measuring the shock wave movement. A pile's bearing load capacity may be calculated with the Hiley (pile driving) formula. The sensors may also sense if a pile is broken by measuring the shock wave movement. For example, if a shock wave returns too fast the pile may be broken.

The sensors may measure the displacement of the pile, i.e. how much the pile sinks minus how much the pile raises per hammer blow. The sensors may also measure the vibration, i.e. fingerprint, caused by the hammer blow. The vibration will tell if the hammer blow is eccentric. A sensor may comprise a geophonic component, to provide a seismic signal for determination of the accelerations in the pile during the elastic wave made by the hammer. Strong motion accelerometers can be used in an embodiment in suitable part.

A readable memory 216 may be arranged to the pile. The readable memory 216 may be embedded in the pile. Alternatively, the readable memory 216 may be attached to the side of the pile. The readable memory 216 comprises memory for storing sensor data. The readable memory 216 may comprise data transmitting means for transmitting sensor data to remote entities such as (data output) terminal devices and/or servers. The data transmitting means may include a radio transmitter for wireless communication means such as NFC or Bluetooth®. Alternatively, data may be transmitted with wired communication means.

A terminal device may be a computing device, preferably comprising a display, for reading measured data. In one embodiment a working machine comprises a (data output) terminal device such that the worker controlling the working machine may advantageously read the measured values. A terminal device may be located in a pile driver for example. The terminal device may be any computing device, such as a mobile phone (e.g. smartphone), laptop computer, desktop computer or tablet, for example.

The data received from the transmitter, by a receiver, is processed in a signal processing entity. According to an embodiment the signal processing entity is computing means arranged in the communication with said receiver, so that according to an embodiment variant the computing means are run in a microprocessor of a terminal device, such as a computer for example, to make a harmonic analysis to the received signal. According to an embodiment of the invention the harmonic analysis is made in FFT-means (Fast Fourier Transform) to obtain the spectrum of the vibrations in the pile as measured, to be used for determination of the tensile strength, the young modulus and/or an elasticity coefficient.
According to an embodiment of the invention the sensor signal as received that is processed in a signal processing entity, implemented in an embodiment by a computing means operable in a microprocessor of a computer unit, to obtain the measured signal, preferably via airway to the hosting computer, the signal to be used in determination of a deformation degree of the pile, in other words, how much the pile has been compressed during the hammering period under observation.

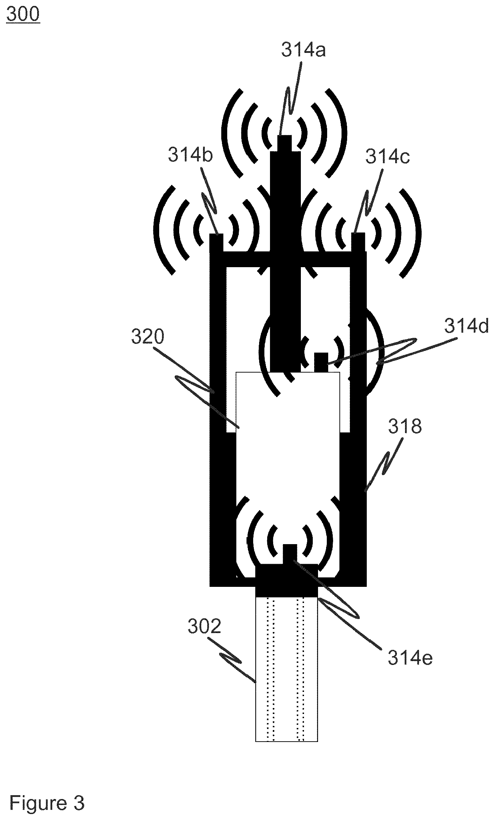

Referring to figure 3, a number of sensors 314a-e are arranged in contact with a hammer 318 for a measurement configured for measuring the structural strengths of a pile 302. The hammer comprises a block 320 for driving the pile 302 to the ground. A number of sensors 314a may be arranged in contact with the shaft of the hammer 318. Additionally or alternatively, a number of sensors 314b, 314c may be arranged in contact with the frame of the hammer 318. Additionally or alternatively, a number of sensors 314d, 314e may be arranged in contact with the block 320 of the hammer 318. A number of sensors 314d may be arranged in the upper part of the block and/or a number of sensors 314e may be arranged in the lower part of the block. The number of sensors 314a-314e may comprise readable memory and data transmission means for transmitting measured data to remote entities such as terminal devices and/or server entities.

The expression "in contact" may in this application refer to that a part (such as a sensor) is attached to something, for example the pile or the shaft of the hammer, or it may refer to that the part (e.g. sensor) is embedded inside the means (e.g. pile or shaft). A part may be embedded during manufacturing (for example casting) or it may be embedded afterwards, i.e. e.g. by drilling a hole in the means.

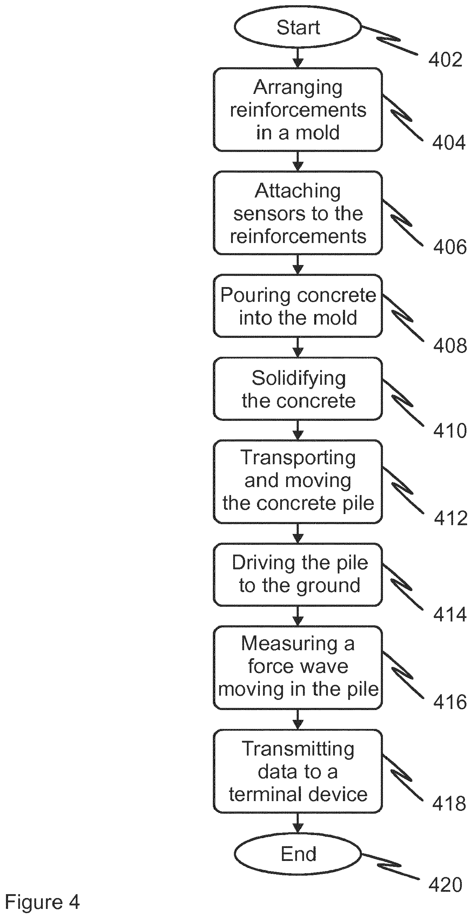

Figure 4 is a flow diagram of an embodiment of a method in accordance with the present invention.

At method start-up 402, preparatory actions may take place. This may include acquiring correct materials and/or production tools and other necessary actions to be able to execute the method.

At 404, reinforcements are arranged in a mold. Reinforcement materials may be steel, metal or any other suitable reinforcement material.

At 406, a number of sensors and a readable memory are attached to the reinforcements. The sensors may be attached to the reinforcements such that they will be located close to the center of the pile after casting concrete.

At 408, concrete is poured into the mold.

At 410, the concrete solidifies.

At 412, the concrete pile is transported and/or moved to the use location.

At 414, the concrete pile is driven into the ground. The step may include hammer blows to the concrete pile with a pile driver.

At 416, the force wave is measured. The sensor in the pile captures the force wave moving in the pile.

At 418, the measured data is transmitted to a data output terminal device. Additionally the measured data may be transmitted to a server.

At 420, the method execution is ended.

According to an alternative embodiment of the invention the steps 408 to 410 can be replaced in suitable part by providing the sensor locations for the mounting and mounting the sensors in contact with the pile, for such pile materials that are not applicable in using mold-cast concrete in the pile as a pile material in its composition.

The signal processing means comprises according to an embodiment of the invention a harmonic analyzer. According to an embodiment of the invention, the pile is considered as a string, which has its free end above the ground, and the buried portion in the ground at the opposite end of the end being hammered.

According to an embodiment of the invention, the harmonic analyzer considers the free end of the pile as a vibrating string, with the characteristic harmonics.

As the hammer hits the pile, the pulse can be diversified via the FFT to the harmonic components, of which the ones that have wave length proportional to the distance between the hammering end and the soil boundary are left into the pile, to get attenuated as the elasticity of the pile material determines. The other components, which belong to the harmonic series of the vibrations of the pile, are damped because of the soils aside the pile. Thus the pile operates as a sort of a high-pass filter to cut the lower frequencies from the spectrum and pass the higher frequencies. During the progressing hammering the pile into the ground, the mechanical waves that preserve in the pile change, as the high-pass cut frequency is getting higher during the penetration of the pile into the ground. According to an embodiment of the invention, it could be also possible to determine the pile length changes within the accuracy of the signal processing for such a pile that is hammered, if the pile experience measurable length changes, i.e. shortening, during the hammering.

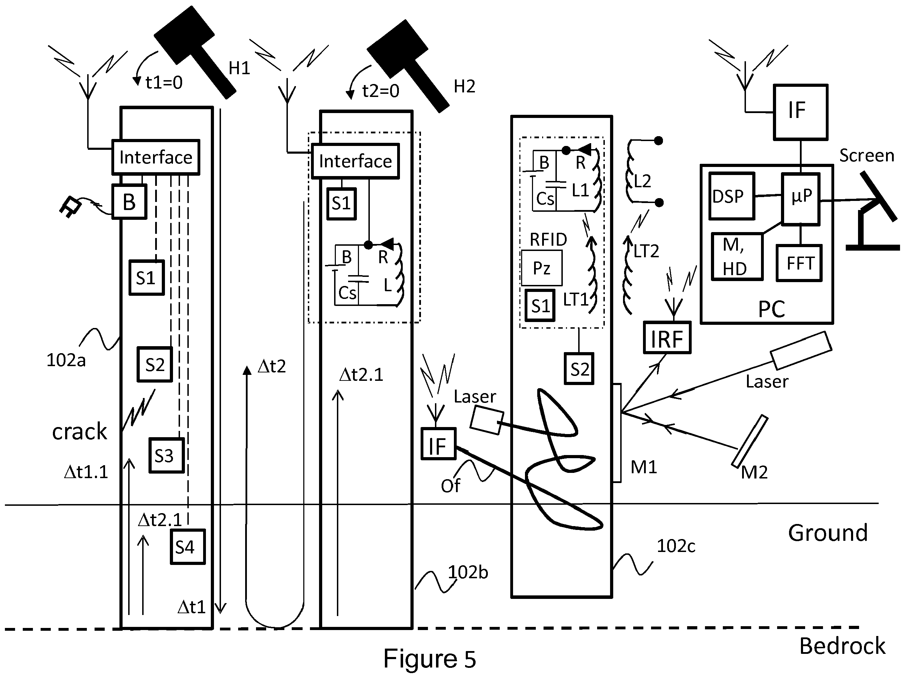

In the following with a reference to the Fig.5, examples on embodiments of the invention are illustrated. Without intention to limit a pile-farm pile number only in the shown example to three (1021, 102b, 102c), three piles have been shown with various pile features illustrative to sense the hammer pulse and/or its echo by at least one sensor. Such demonstrated pile features are for example, use of an ensemble of at least one sensor (s1,s2,s3,s4, Pz, RFID, IF(M1, M2), IF(Of)), to determine a hammer pulse (H1, H2) of at least one pile in time domain (t1=0, t2=0; Δt1, Δt1.1, Δt2 Δt2.1). The parenthesis used to indicate sub-components in the structure in such denoted embodiment variant).

Using an ensemble of sensors may produce extra echos into the pile, but, the sensor locations are precisely known at the assembly or mold, so the incident hammer pulse is redundantly observed by the other sensors, but so are the echos coming from the bottom. If a serious crack or other non-intentional inhomogeneity were somehow acute in a pile, it would be observed as producing an unknown echo that does not correspond time domain location of the known sensor locations or the pile 102a bottom. As the pile 102a has the energy source B at least partly inside/outside the pile structure, the B being continuously connected to electricity (as demonstrated by the schematic sticker connector), the vibrations in the pile can be even continuously monitored, or intermittent time intervals or periodically.

That kind of embodiments can be used in very critical structures, where the pile is in a strategic location for the construction, i.e, atomic power plant, bridge or an important building. The interface has been so energized by the B, to have the sensors s1 to s4 in operation in the pile 102a. According to an embodiment, a sensor can be integrated also to the interface. According to a further embodiment variant also the energy source B can be integrated, although drawn separate to illustrate an embodiment modularity. The antenna symbol at the left side of the pile demonstrate electromagnetic communication to transmit the data and/or sensor signal from the sensors via the interfacing module to a reading device, connected to a computer (IF, and PC at right). According to an embodiment the communications can be duplexed. The hammer pulse by the Hammer H1 is the hammer pulse coming from the hammering of the pile 102a at the moment t1=0.

The Δt1 is demonstrating the moment of the echo from the bottom of the pile 102a in time domain. The Δt1.1. is drawn into the figure as an indication of an unexpected crack to occur.

Sometimes it might be possible to hear also the hammer pulse H2 hitting to the pile 102b, also in the pile 102a, but with the provision that the pile ends (102a, 102b) are sufficiently well connected to the bed rock to for example to pass the pulse also to the neighboring piles in the farm, to those that are equally well connected to the bed rock. The Δt2 between the aforementioned piles drawn with the direction changing arrow is demonstrating the situation. The Δt2.1 is a hammer pulse from the Hammer H2, but propagating in the pile 102b.

The pile 102b has a pile feature that the hammering pulse is monitored at the upper end of the pile. The dashed line surrounding the interface, sensor s1, and the circuit comprising an inductance L, Capacitor Cs, and a battery B is demonstrating that the modules just mentioned can be integrated into the same unit. The unit can be inside the pile, but in suitable part outside the pile, as demonstrated by the way of drawing. The antenna symbol demonstrating electromagnetic communication to a computer (PC). The inductance L can be of an open transformer, to be used to feed energy for the unit. The R is demonstrating a rectifier, so that the B can charged by the coil L via outside the pile, and the operation to continue as long as there is charge available in the B or the capacitor Cs. The capacitor can be a super condenser, at least partly replacing the electricity storing of the B, if not all of it, in the demonstrated pile 102b location. In critical embodiments, the circuit may be operable to provide the operating power to the pile, even in a nuclear power plant even during a temporary loss of extraneous electricity, long after the construction assembly, when used in monitoring the vibrations, beneath the reactor for example.

In the pile 102c in the Fig 5 example, the pile is embodied to comprise an RFID sensor. Although the pile features comprise the RFID feature, the sensoring circuit comprises a power module (B, Cs, L1, R, and L2) to power up the sensoring circuit in a similar way as in pile 102b. However, the communication is implemented in terms of RFID, so that the LT1 and LT2 are transceiver means that make a communication pair, so that the means can be identify each other, for the communicating the sensor data out of the pile, to end up to the computer unit demonstrated by the PC.

The pile 102c has also an extraneous optical detection as a demonstrated pile feature, implemented in the local example by a light source (laser in the embodiment for a monochromatic coherent light source), and an interferometer illustrated by IRF, M1 and M2, respectively the analyzer, a first mirror and a second mirror, which are positioned to detect a hammering pulse and the following echos in the time domain via the laser radiation interference, and/or the changes during the pulse and the pulse wavelets passing by the location.

The pile 102c has also in supplement or in option, an intrinsic optical detection as a demonstrated pile feature, implemented in the local example by a light source (laser in the embodiment for a monochromatic coherent light source), and an optical fiber Of buried into the pile, to pick the vibrations to be delivered to the interface IF, for transmission to the a reading device connected to the computer PC. Although drawn widely, the optical fiber Of can be directed to horizontal direction only, or essentially horizontally to represent with the position a time domain location when detecting a hammering pulse and the following echos in the time domain via the laser radiation, and/or the changes during the pulse and the pulse wavelets passing by the location.

The coils LT1 and LT2 demonstrate an electromagnetic interrogation and/or reading of the sensor data from the RFID, to be communicated between an individual sensor s1, s2 and the computer unit PC.

The sensor data when detected, and sent from the pile, the data comprising hammer pulse sampled and/or the corresponding detected echos also as sampled, via the air way, to the receiving unit IF connected to the computer, is analyzed, processed and saved for later use. The computer can be used also as a logger in a later monitoring of certain piles of the pile farm. The DSP means in the Fig 5 illustrate data processing, signal conditioning and filtrations etc. M illustrates the memory in the use of the microprocessor µP of the computer PC, and the HD illustrates a hard disk or similar to store the data, programs, algorithms etc. FFT is illustrative for means for a Fast Fourier Transform, to be used in the signal processing to make a Fourier transform to the observed signal to catch the frequencies of the components of the Hammer pulse and/or the echos. FFT can be used in co-operation with DSP, if the DSP as such is not in the same module as the FFT in an embodiment variant.

### Example 1.

According to an example of the invention, an acceleration sensor (for example s1) has been attached to a pile 102a that is about to be used in the construction work for piling the foundations into the ground. According to an embodiment variant, there is an ensemble of sensors (s1, s2, s3, s4) in the pile, of which the acceleration sensor is one sensor, without any limitation to the number of the acceleration sensor number. The acceleration sensor is mounted to a position to monitor a hammer pulse that is reflected from the pile end in the ground during the hammering. In addition the sensor is also arranged to monitor the incident hammer pulse, before its reflection from the distal end, opposite to the hammering end. According to an embodiment the incident and reflected pulse are arrange to be monitored by different sensors, at different locations. In such a topology the reflected pulse and its wavelets from the inhomogenities can be monitored, and such embodiments in which there are several sensors along the length of the pile, a potential breakup location can be determined from the reflected shock waves initiated by the hammering.

According to an embodiment the acceleration sensor is situated into the pile. According to an embodiment of the invention the sensor is arrange to be in operative communication connection to the outside world of the pile to relay the data from the sensor. According to an embodiment the operating power of the sensor (s1) in an ensemble of sensors (s1, s2, s3, s4) that comprises at least one sensor (s1) is arranged by an external feed line, from outside the pile. In such a variant there can be a battery pack B for the operation power, and in an even further variant the battery pack B is replaceable, at the pile surface or near it location in a recess, and even in a further embodiment variant rechargeable (as the B in an embodiment feature of pile 102a in Fig 5). According to a variant of an embodiment the operating power is arranged via inductive coil(s) (L, L1, L2) from the outside of the pile into the inside side of the pile to a sensor assembly. According to an embodiment the battery pack B is of the type built into the pile, but rechargeable (B as exemplified in the piles 102b, 102c in Fig 5) by an induction coil (L, L1, L2). Thus, the pile can be monitored as long as power is available, and the coil can be used with a rectifier R to recharge for a new monitoring period. In an embodiment variant the battery B has been provided in parallel by a condenser, a capacitor Cs, but in a further embodiment by a super condenser Cs that has a large capacitance to store charge. According to an embodiment of the invention an ensemble of such piles (102a, 102b, 102c) can be used in monitoring seismic activity of the ground at the piling location, and/or after the assembly also to monitor other vibrations that can be significant to the structure in which the pile has been used. For example a motor way bridge and/or railway bridges, an atomic power plant etc. may have such structures that might be under an interest of monitoring at least occasionally the vibrations, their existence, and/or potential to make cracks if any.

According to an embodiment of the invention there are communication means LT1, LT2 at the upper part of the pile, in disposal of the sensor S1, S2 to convey the data from the pile location to a signal processing means DSP (in the PC) via the air way. According to an embodiment, such a sensor can be located at the top of the pile, near the hammer hitting area, but according to an embodiment variant, a sensor or several of such (s3, s4) can be wired from down parts of the pile (as demonstrated with pile 102a) to the communication means (interface and the antenna) at the top. The communication means can be situated inside the pile in suitable part in an embodiment variant, but in an alternative embodiment outside the pile.

According to an embodiment of the invention a sensor comprises means to detect the time of flight of the hammer pulse, and/or its reflection. The pulse strength can be measured too. According to an embodiment a piezo sensor (Pz) can be used to detect the hammer pulse and/or its echos. Although the piezo sensor pile feature has been illustrated within the RFID embodiment, it is not limited only to the connection of an RFID component presence as such as in the example.

According to an embodiment variant, the operation power for the sensor is provided with an RFID - technology. Same techniques can be used to identify and read the RFID tag in the pile, and/or the information gathered by the sensor. According to an embodiment the functionality of the RFID is provided with Wi-Fi, and or Blue Tooth protocol communication from the pile to the computer. According to an embodiment, even an analogue signal can be transmitted from the pile to the computer, where the final sampling can be done by the DSP and/or FFT to reveal the frequencies associated to the free end of the pile, to be used in the determination of the structural features of the pile.

### Example 2.

According to an embodiment of the invention the sensor comprises at least one of the following: A strain gauge, acceleration sensor, gyroscope, geophone, piezo sensor. According to an embodiment of the invention, several types of sensors are used as diversified. According to an embodiment same type of sensors are present in the same pile redundantly. Such piles that has redundancy and diversified type according to the specs of an atomic power plant for example, can be used in the demanding construction where needed.

### Example 3.

According to an embodiment at least one sensor is connected to the hammer measure the hammering force and the acceleration when hitting the pile. According to an embodiment, a back blow, i.e. the echo from the reflected pulse at the bottom of the pile is measured with a sensor located to the hammer, provided that the hammer keeps the contact sufficiently long so that the pulse can travel the expected length of the pile back and forth, as provided with a suitable dynamic range for the sensor to detect the reflected pulse, but to tolerate the incident hammer pulse. The sensors can also be diversified into a pair of sensors to better have the dynamic range for the both pulses, the incident and the echo of it. This kind of embodiments are suitable to work also with such piles, that are dummies, i.e. which do not have any sensors or intelligence as exemplified abovementioned examples, or are somehow inapplicable to be monitored with sensor attached or molded into the pile.

### Example 4.

According to an embodiment a sensor has identity to show to the signal processing algorithm (DSP), which identity is associated to be reported while the data being read from the interface. This way individual piles of a pile farm can be pointed and selected, and if piles when hit influence each other via the soil or bedrock as met, the reflected wavelets can be recognized by a pulse height analyzer to analyze pulse heights of the wavelets' intensities above a threshold value, when the pulse being sampled. In such a farm of piles, reading from a hammer pulse to a pile to be read from another pile's sensor, can be used judging the status, has the piles reached bedrock or not. This is because of meeting an intermediate largish stone in a mud or soil, the sensors in the other piles should not react as much as there were the bedrock met, provided that there is at least one other pile in contact with the bedrock.

According to an embodiment of the invention there is a timeframe applied to discriminate pulses propagating from other piles, according to the time frame of which, the time, as measured from the incident hammer pulse the distal end reflected echo pulse and the other passages propagated echos of the hammer pulse expected to be received by the sensor to represent the same pile that was hammered. The sensor readings can be made in the control of the computer, and/or the DSP algorithm, in association with the FFT means. Naturally, if more than one hammering device is in use, several pulses may be available for the detection, within the provisions of the pile connections.

### Example 5.

According to an optional embodiment of the invention, the pile is provided with a mirror surface, made of mirroring metallic material tolerating the hammering pulses, so that a laser light is directed to the pile, to the mirror on it M1, to be used as an interferometer part, and the reflected light ray is observed interferrometrically by using suitable ensemble of mirrors, the M1, M2 being as examples, not to limit the number of the mirrors only to the shown example. As the mirror being modulating the laser light, the hammer pulse is detected, as well as the reflected secondary pulses in the pile, as influencing to the mirror vibrations, to produce interferometric data from which the vibrations can be identified and the pile properties. A further optional embodiment variant is based on optical fiber (Of, Fig 5) utilization in the pile structure. In such embodiment there is a coherent monodisperse light guided through the optical fiber during the hammering, while the light signal when passing the light-guide, is also picking vibrations of the pile, in which the optical fiber is either buried or mounted to the surface in suitable part. Such optical embodiments are suitable at least in audible range of vibrations, but can be applied in suitable part also in other frequency ranges.

### Example 6.

According to an embodiment of the invention, a sensor signal was observed by a sensor s1 connected to the pile 102a. The hammer pulse of a hammer H1 and the pile vibrations associated to the frequencies corresponding the above-ground free end of the pile were observed, and the observing sensor s1 was sending a signal from the pile 102a to a receiver (in the interface) via interfacing amplifier (interface) to adjust the signal level suitable for the electronics, to be sent via air way, to a receiving interface IF connected to the computer PC and the signal processor DSP and/or FFT -means of the computer PC, for computing pile structural features.

In an embodiment the signal was an analogue signal, which was sampled by 50 kHz frequency in a first set up to produce sampling data to be fed to the FFT algorithm for the spectral analysis. In a second set up, the sampling was made at 20 kHz sampling frequency and in a third exemplary set up at 10 kHz sampling frequency. Also other sampling frequencies were used, in the intermediate ranges. FFT means determined the corresponding spectrums and the structural parameters of the pile were determined.

According to an optional embodiment the aforementioned sampling was made already in the interface and/or in the sensor S1 in a further embodiment variant, and the sent signal to the computer is a digital signal, to be further processed.

### Example 7.

The computer has program means that are arranged to compute at least one of the structural features of the pile. Structural features comprise parameters of the pile as at least one of the following: Tensile stress, extensional strain, strength, elasticity coefficients, Young modulus, pile length, pile deformation degree, Poisson number, compression strength, crack number, location number, neighboring pile identity and its composition, etc. For avoidance of the cracks and/or observance of such for example, it might be important to make sure that the neighboring piles are intact, for the sufficient loading specks in the intended use.

Consequently, a skilled person may on the basis of this disclosure and general knowledge apply the provided teachings in order to implement the scope of the present invention as defined by the appended claims in each particular use case with necessary modifications, deletions, and additions.

## Claims

1. An arrangement for measuring the structural strengths of a pile, **comprising**
- a number of sensors (S1, S2, S3, S4, 214a, 214b, 214c) embedded in the pile (102a, 102b, 102c, 102d, 202, 302), wherein at least one of the sensors (S1, S2, S3, S4) has a sensor identity,
- a readable memory (216, 314a, 314b, 314c, 314d, 314e) comprising data transmitting means for transmitting sensor data of a sensor with sensor identity to a terminal device (IF, IRF, RFID, PC), wherein said at least one sensor (S1, S2, S3, S4, 214a, 214b, 214c, 314a, 314b, 314c, 314d, 314e) with sensor identity in the arrangement is arranged in the pile (102a, 102b, 102c, 102d, 202, 302) to observe a hammer (318 H1, H2) produced hammer pulse associated frequencies that correspond the above-ground free end of the pile.

2. The arrangement of claim 1, **wherein** the number of sensors (102a, 102b, 102c, 102d, 202, 302) comprises at least one of the following: accelerometer, strain gauge, pressure sensor, geophone and/or a gyroscope.

3. The arrangement of any preceding claim, **wherein** the readable memory (216) and data transmitting means (216, LT1) are embedded in the pile (102a, 102b, 102c, 102d, 202, 302).

4. The arrangement of claims 1 or 2, **wherein** the readable memory and data transmitting means (216, 314a, 314b, 314c, 314d, 314e, IF) are arranged outside the pile.

5. The arrangement of any preceding claim, wherein the data transmitting means comprise a radio transmitter (RFID, LT1, LT2, IF, Interface) for wireless transmitting of data, the transmitting means being suitable for at least one of the following, RFID, Wi-Fi, NFC and Bluetooth®.

6. The arrangement of any preceding claim, **wherein** the measured structural strength of the pile is the bearing load capacity of the pile (102a, 102b, 102c, 102d, 202, 302).

7. An arrangement for measuring the structural strengths of a pile, **comprising**
- a number of sensors (314a, 314b, 314c, 314d, 314e) arranged to a piling (414) hammer (318, H1, H2),
- a readable memory comprising data transmitting means (314a, 314b, 314c, 314d, 314e) for transmitting sensor data of at least one of said sensors to a terminal device, wherein the terminal device is arranged to receive sensor data from a sensor (314a, 314b, 314c, 314d, 314e) of the hammer (318, H1, H2) and/or sensor data from at least one of the sensors (S1, S2, S3, S4, 214a, 214b, 214c) embed in a pile (102a, 102b, 102c, 102d, 202, 302), the sensor data to be passed to a computer (PC) for determination of at least one structural feature of the pile by observance of a hammer (318 H1, H2) produced hammer pulse associated frequencies that correspond the above-ground free end of the pile.

8. A method for measuring structural strengths of a pile (102a, 102b, 102c, 102d, 202, 302) of concrete or another solidifying matter, **comprising** at least the steps of
- arranging reinforcements in a mold (404),
- attaching a number of sensors (S1, S2, S3, S4, 214a, 214b, 214c) and a readable memory (216, Interface) to the reinforcements (406),
- pouring concrete or said another solidifying matter into the mold (408),
- solidifying the concrete (410) or said another solidifying matter,
- transporting and moving the pile of concrete or another solidifying matter (102a, 102b, 102c, 102d, 202, 302), (412),
- driving the pile of concrete or another solidifying matter to the ground (414),
- measuring data comprising a force wave moving in the pile of concrete or another solidifying matter (416), by using at least one sensor (S1, S2, S3, S4, 214a, 214b, 214c, 314a, 314b, 314c, 314d, 314e) with sensor identity in the measurement being arranged in the pile (102a, 102b, 102c, 102d, 202, 302) to observe hammer (H1, H2) pulse associated frequencies that correspond the above-ground free end of the pile, and
- transmitting measured data to a terminal device (418).

9. The method of claim 8, **wherein** the method steps comprise optionally providing the location of at least one of the sensors (S1, S2, S3, S4, 214a, 214b, 214c) for the mounting of said at least one sensor of the sensors (S1, S2, S3, S4, 214a, 214b, 214c).

10. The method of claim 8 or 9, **wherein** the method steps comprise solidifying concrete or another solidifying material in the mold for mounting at least one sensor of the sensors (S1, S2, S3, S4, 214a, 214b, 214c).

11. A pile **comprising** at least one embedded sensor (S1, S2, S3, S4, 214a, 214b, 214c) according to claim 1 in the pile.

12. A hammer (318, H1, H2) for hammering a pile (102a, 102b, 102c, 102d, 202, 302) **according** to claim 11, into the pile position, the hammer (318, H1, H2) comprising at least one sensor (314a, 314b, 314c, 314d, 314e) attached to the hammer (318, H1, H2).

13. A piling system, **comprising** an ensemble of piles (102a, 102b, 102c, 102d, 202, 302), comprising at least one pile (102a, 102b, 102c, 102d, 202, 302) according to claim 11.

14. A piling system of claim 13, **comprising** at least one radio-transmitter (RFID, Interface) for wireless communication of data about the measured quantities in determination of the structural strength of the pile.

15. A piling system of claim 13 or 14, **wherein** the system comprises a sensor (S1, S2, S3, S4, 214a, 214b, 214c, 314a, 314b, 314c, 314d, 314e) with a sensor identity for obtaining sensor data, to be shown to the signal processing algorithm (DSP), the sensor, to be associable to an individual pile (102a, 102b, 102c, 102d, 202, 302) of a pile farm, for obtaining sensor readings in control of a computer (PC), provided with means arranged for a harmonic analysis of a hammer (318, H1, H2) produced hammer pulse associated frequencies that correspond the above-ground free end of the pile (102a, 102b, 102c, 102d, 202, 302).
